# EUROPÄISCHE PATENTANMELDUNG

(11) **EP 0 606 860 A2**
(43) Veröffentlichungstag der Anmeldung: **20.07.1994**
(21) Anmeldenummer: 94100195.0
(22) Anmeldetag: 07.01.1994
(51) Int. Cl.: B01D 3/14, B01D 5/00, C08J 11/02, C08F 6/00, D01F 13/00, D06F 43/08

(54) **Verfahren zur Lösungsmittel-Rückgewinnung sowie dafür geeignete Vorrichtung**

(30) Priorität: 15.01.1993 DE 4300921
(71) Anmelder: HOECHST AKTIENGESELLSCHAFT, D-65929 Frankfurt am Main (DE)
(72) Erfinder: Rewitzer, Siegfried, D-93346 Ihrlerstein (DE); Roth, Peter Manfred, D-65817 Eppstein/Ts. (DE)

(57) **Zusammenfassung**

Beschrieben wird ein Verfahren zur Rückgewinnung und Wiederverwendung von Flüssigkeiten, die bei der chemischen Umsetzung und/oder der Verarbeitung von Stoffen als Lösungsmittel und zur gezielten Verdünnung des Lösungsmittels eingesetzt werden. Das Verfahren umfaßt die Maßnahmen:
a) Einbringen von frischem Lösungsmittel (2) in eine Bearbeitungsanlage (3),
b) Einbringen von frischem Verdünnungsmittel (5) in die Bearbeitungsanlage,
c) Einbringen von umzusetzenden und/oder zu verarbeitenden Stoffen (7) in eine Behandlungsvorrichtung (8) der Bearbeitungsanlage (3),
d) Ausschleusen von Produkten (10) aus der Bearbeitungsanlage (3),
e) Zuführen des verbrauchten Gemisches (12) zu einer Lösungsmittelrückgewinnungsanlage (13),
f) Auftrennen des Gemisches aus Schritt e) in der Lösungsmittelrückgewinnungsanlage (13) in eine Lösungsmittelfraktion (15), welche hauptsächlich aus Lösungsmittel besteht und gegebenenfalls einen geringen Anteil an Verdünnungsmittel enthält, in eine Verdünnungsmittelfraktion (17), welche hauptsächlich aus Verdünnungsmittel besteht und gegebenenfalls einen geringen Anteil an Lösungsmittel enthält, und in Rückstände aus der Umsetzung und/oder Verarbeitung der Stoffe,
g) Rückführen der Lösungsmittelfraktion (15) in die Bearbeitungsanlage (3), so daß diese für die Umsetzung und/oder Verarbeitung der Stoffe erneut zur Verfügung steht, und
h) Rückführen der Verdünnungsmittelfraktion (17) in die Bearbeitungsanlage (3), so daß diese für die Umsetzung und/oder Verarbeitung der Stoffe erneut zur Verfügung steht,
i) Ausschleusen von Rückständen aus der Umsetzung und/oder Verarbeitung der Stoffe aus der Bearbeitungsanlage.
Ferner wird eine Vorrichtung zur Durchführung des Verfahrens beschrieben. Diese Vorrichtung ist beispielhaft in Fig. 1 dargestellt.

## Beschreibung

Die vorliegende Erfindung betrifft ein Verfahren zur Lösungsmittel-Rückgewinnung, sowie eine zur Durchführung dieses Verfahrens angepaßte Vorrichtung.

In vielen Herstellungs- und Verarbeitungsverfahren werden Lösungsmittel mit dem eigentlichen Rohstoff und/oder dem Produkt in Berührung gebracht. Üblicherweise wird das Lösungsmittel dabei verunreinigt und wird im Anschluß an das eigentliche Verfahren einer Reinigung unterzogen. Häufig erfordern es die einzelnen Verfahren, daß die zum Einsatz gelangenden Lösungsmittel durch gezielte Zugabe einer weiteren Flüssigkeit verdünnt werden, sei es, um eine geforderte Lösungsviskosität einzuregeln, oder aus Kostengründen oder um bestimmte Verfahrensschritte durchführen zu können, beispielsweise das Fällen eines gelösten Stoffes in einem Fällbad. Aus einer Lösungsmittel-Rückgewinnungsanlage werden üblicherweise sowohl die Verunreinigungen (Abfallstoffe) als auch das Verdünnungsmittel ausgeschleust, während das gereinigte Lösungsmittel erneut dem Herstellungsprozess zugeführt wird. Solche vorbekannten Verfahren sind allgemein üblich. Ein Beispiel dafür findet sich in Kirk-Othmer: "Encyclopedia of chemical Technology", Vol. 21, 3^{rd} Edition, John Wiley & Sons (1983), Stichwort "Solvent Recovery", S. 357.

In den letzten Jahren sind die Anforderungen an den Betrieb von Anlagen, in denen chemische Stoffe umgesetzt oder verarbeitet werden, zunehmend strenger geworden. Dies betrifft sowohl die Emission von chemischen Stoffen, die durch den Betrieb solcher Anlagen hervorgerufen wird, als auch den Verbrauch an Energie beim Betrieb dieser Anlagen.

Es besteht also ein Bedarf nach Verfahren und Vorrichtungen, mit denen chemische Stoffe mit einem Minimum an Engergiebedarf umgesetzt oder verarbeitet werden bzw. bei deren Betrieb ein Minimum an Abfallstoffen anfällt.

Mit der vorliegenden Erfindung wird ein Verfahren bereitgestellt, bei dem zumindest ein Teil der eingesetzten Lösungs- und Verdünnungsmittel in den Kreislauf zurückgeführt wird, so daß mittels dieser einfachen Maßnahme ein verringerter Verbrauch an Lösungsmittel und Verdünnungsmittel für dieses Lösungsmittel erzielt wird. In einer bevorzugten Ausführungsform des erfindungsgemäßen Verfahrens wird eine Verringerung des Energieverbrauchs bei der Lösungsmittelrückgewinnung erreicht.

Die vorliegende Erfindung betrifft ein Verfahren zur Rückgewinnung und Wiederverwendung von Flüssigkeiten, die bei der chemischen Umsetzung und/oder der Verarbeitung von Stoffen als Lösungsmittel und zur gezielten Verdünnung des Lösungsmittels eingesetzt werden, umfassend die Maßnahmen:
a1) Einbringen von frischem Lösungsmittel in eine Bearbeitungsanlage,
b1) Einbringen von frischem Verdünnungsmittel in die Bearbeitungsanlage,
c1) Einbringen von umzusetzenden und/oder zu verarbeitenden Stoffen in eine Behandlungsvorrichtung der Bearbeitungsanlage,
d1) Ausschleusen von Produkten aus der Bearbeitungsanlage,
e1) Zuführen des verbrauchten Gemisches von Lösungsmittel, Verdünnungsmittel und Rückständen aus der Umsetzung und/oder Verarbeitung der Stoffe zu einer Lösungsmittelrückgewinnungsanlage,
f1) Auftrennen des Gemisches aus Schritt e1) in der Lösungsmittelrückgewinnungsanlage in eine Lösungsmittelfraktion, welche hauptsächlich aus Lösungsmittel besteht und gegebenenfalls einen geringen Anteil an Verdünnungsmittel enthält, in eine Verdünnungsmittelfraktion, welche hauptsächlich aus Verdünnungsmittel besteht und gegebenenfalls einen geringen Anteil an Lösungsmittel enthält, und in Rückstände aus der Umsetzung und/oder Verarbeitung der Stoffe,
g1) Rückführen der Lösungsmittelfraktion in die Bearbeitungsanlage, so daß diese für die Umsetzung und/oder Verarbeitung der Stoffe erneut zur Verfügung steht,
h1) Rückführen der Verdünnungsmittelfraktion in die Bearbeitungsanlage, so daß diese für die Umsetzung und/oder Verarbeitung der Stoffe erneut zur Verfügung steht, und
i1) Ausschleusen von Rückständen aus der Umsetzung und/oder Verarbeitung der Stoffe aus der Bearbeitungsanlage.

Der Begriff "chemische Umsetzung von Stoffen" ist in seiner weitesten Bedeutung zu verstehen. Dabei handelt es sich also um Verfahren, bei denen irgendwelche Stoffe unter Veränderung ihrer chemischen Zusammensetzung in andere chemische Stoffe umgewandelt werden. Dabei kann es sich um Reaktionen handeln, bei denen ein Ausgangsstoff zu einem Produkt neuer chemischer Konstitution umgesetzt wird oder bei denen zwei oder mehrere Ausgangsstoffe zu einem oder mehreren Produkten neuer chemischer Konstitution miteinander umgesetzt werden. Bevorzugte Beispiele für solche chemischen Umsetzungen sind Polymerisationsreaktionen, wie Polymerisationen, Polykondensationen oder Polyadditionen.

Der Begriff "Verarbeitung von Stoffen" ist ebenfalls in seiner weitesten Bedeutung zu verstehen. Dabei handelt es sich also um Verfahren, bei denen irgendwelche Stoffe unter Beibehaltung ihrer chemischen Zusammensetzung verarbeitet werden. Dabei kann es sich um Reinigungsverfahren handeln, die mit Hilfe von Gemischen enthaltend Lösungsmittel und Verdünnungsmittel durchgeführt werden, beispielsweise um die Entfettung von Gegenständen oder um das Umkristallisieren von chemischen Stoffen, oder es handelt sich um Formgebungsverfahren, bei denen ein gelöster chemischer Stoff oder eine Mischung solcher Stoffe zu einer vorbestimmten Form verarbeitet wird. Beispiele dafür sind die Herstellung von Folien, Fasern oder Beschichtungen aus Lösungen gelöster Verbindungen, insbesondere aus Polymerlösungen.

Unter dem Begriff "Lösungsmittel" sind alle Verbindungen, insbesondere organische Verbindungen zu verstehen, mit denen Lösungen von Stoffen hergestellt werden können, die bei einer Umsetzung oder Verarbeitung dieser Stoffe eingesetzt werden.

Beispiele für bevorzugte organische Lösungsmittel sind aliphatische oder aromatische Kohlenwasserstoffe, die gegebenenfalls halogeniert sein können, wie bromierte oder chlorierte Kohlenwasserstoffe, sowie polare aprotische Lösungsmittel, wie Amidlösungsmittel.

Bevorzugte Beispiele für organische, polare und aprotische Lösungsmittel sind N-Methylpyrrolidon, N,N-Dimethylformamid, N,N-Dimethylacetamid und Dimethylsulfoxid.

Unter dem Begriff "Verdünnungsmittel zur gezielten Verdünnung des Lösungsmittels" sind Flüssigkeiten zu verstehen, die sich vom jeweils eingesetzten Lösungsmittel unterscheiden und im weitesten Sinne vor oder während des Umsetzungs- oder Verarbeitungsverfahrens dem Lösungsmittel gezielt zugesetzt werden, um an dem gelösten Stoff eine gewollte Veränderung zu erzielen, beispielsweise eine Veränderung der Löslichkeit des gelösten Stoffes, oder um eine Einstellung eines notwendigen Verfahrensparameters, wie der Viskosität der Lösung, vorzunehmen, aber auch um die Kosten für das jeweils eingesetzte Lösungsmittel zu senken.

Es kann sich dabei also um Gemische verschiedener Lösungsmittel für den zur Umsetzung oder Verarbeitung vorgesehenen Stoff handeln oder auch um Gemische aus Lösungsmitteln und Nichtlösungsmitteln für besagten Stoff, insbesondere handelt es sich um eine Kombination aus Lösungsmitteln und Nichtlösungsmitteln, wobei die Kombination selbst nicht mehr als Lösungsmittel sondern als Fällungsmittel für besagten Stoff wirkt.

Besonders bevorzugt handelt es sich bei dem Verdünnungsmittel um ein Nichtlösungsmittel für den zur Umsetzung oder Verarbeitung vorgesehenen Stoff, insbesondere um Wasser.

Bevorzugte Kombinationen von Lösungsmittel und Verdünnungsmittel im erfindungsgemäßen Verfahren sind Gemische aus organischem polarem und aprotischem Lösungsmittel mit Wasser.

Unter dem Begriff "Bearbeitungsanlage" ist im weitesten Sinne eine Anlage zu verstehen, in der die oben definierte "chemische Umsetzung von Stoffen" oder "Verarbeitung von Stoffen" durchgeführt wird. Dabei kann es sich also um eine Anlage zu Polymerisation handeln oder um eine Reinigungsanlage oder insbesondere um eine Anlage zur Herstellung von Folien oder Fasern.

Unter dem Begriff "Behandlungsvorrichtung" ist derjenige Teil der oben erwähnten "Bearbeitungsanlage" zu verstehen, in dem die eigentliche chemische Umsetzung oder Verarbeitung vorgenommen wird. Während der Begriff "Bearbeitungsanlage" die gesamte Anlage bedeutet, also die "Behandlungseinrichtung" einschließlich aller Versorgungs-, Entsorgungs- und Steuerungseinheiten.

Das erfindungsgemäße Verfahren kommt besonders bei der Reinigung von Gegenständen zur Anwendung, bei der Verunreinigungen durch Behandlung mit einem Lösungsmittel entfernt werden.

Ganz besonders bevorzugt kommt das erfindungsgemäße Verfahren bei der Formgebung von Stoffen zur Anwendung, bei der Polymere aus Lösungen in eine gewünschte Form übergeführt werden, insbesondere in Folien, Fasern oder Beschichtungen.

Dabei handelt es sich ganz besonders bevorzugt um eine Formgebung, bei der Polymere aus Lösungen in Faserform übergeführt werden, wobei ein Naßspinnverfahren oder ein Trocken-Naßspinnverfahren angewendet wird, und sich insbesondere direkt an das Ausfällen des Fadens im Koagulationsbad eine Nachbehandlung anschließt.

Bei dem verbrauchten Gemisch nach Schritt e1) handelt es sich vorzugsweise um ein Gemisch, das aus dem Koagulationsbad einer Naßspinnanlage stammt und das organisches, polares und aprotisches Lösungsmittel oder Gemische solcher Lösungsmittel und Wasser enthält.

Zur Lösungsmittelrückgewinnung können alle für diesen Zweck bekannten Verfahren eingesetzt werden, mit denen ein Auftrennen des Gemisches in eine Lösungsmittelfraktion und in eine Verdünnungsmittelfraktion möglich ist.

Beispiele für solche Verfahren sind die extraktive, adsorptive, absorptive und insbesondere die destillative Auftrennung des verbrauchten Gemischs nach Schritt e1).

Bevorzugt wird die Auftrennung in einer Rektifikationskolonne durchgeführt.

Besonders bevorzugt wird das aus dem Koagulationsbad und gegebenenfalls den Nachbehandlungsvorrichtungen, wie Verstreck-, Avivage- und Waschbädern, stammende Gemisch aus Spinnlösungsmittel, Wasser und Rückständen aus dem Fällbad und der Nachbehandlung zu einer Lösungsmittelrückgewinnungsanlage geleitet und das Gemisch wird dort durch Rektifikation in eine Lösungsmittelfraktion, in eine Verdünnungsmittelfraktion und in Rückstände aus dem Fällbad und der Nachbehandlung aufgetrennt.

In einer besonders bevorzugten Ausführungsform des erfindungsgemäßen Verfahrens wird die Zusammensetzung der die Rektifikationskolonne verlassenden Lösungsmittel- und Verdünnungsmittelfraktion so gewählt, daß das Kühlmittel für die Rektifikationskolonne vor seinem Einsatz keiner zusätzlichen Kühlung unterzogen werden muß oder das angewärmte Kühlmittel für den Betrieb zumindest eines Teils der Rektifikationskolonne verwendet werden kann. Diese Ausführungsform beruht auf der Erkenntnis, daß es in manchen Fällen durchaus ausreichend sein kann, keine vollständige Auftrennung in der Lösungsmittel- oder Verdünnungsmittelfraktion durchzuführen, und einen Teil dieser Fraktion durch einen Seitenabzug unterhalb des Kolonnenkopfes aus der Kolonne abzuziehen. Diese Fraktion besitzt einen höheren Siedepunkt als die über Kopf abgezogene Lösungsmittel- oder Verdünnungsmittelfraktion und kann daher bei einer höheren Temperatur kondensiert werden als die reinere Kopffraktion. Mit dieser Ausführungsform des erfindungsgemäßen Verfahrens läßt sich eine zusätzliche Energieeinsparung oder verbesserte Energieausnutzung erzielen.

Eine weitere besonders bevorzugte Variante des erfindungsgemäßen Verfahrens betrifft die Rückführung zumindest eines Teils der Lösungsmittel- oder Verdünnungsmittelfraktion über einen Abluftwäscher, der die aus der Bearbeitungsanlage stammende und mit Lösungsmittel- und Verdünnungsmitteldämpfen angereicherte Abluft reinigen soll. Auch mit dieser Ausführungsform läßt sich eine zusätzliche Kühlwassereinsparung und somit auch Energieeinsparung erzielen. Dazu führt man z.B. die gekühlte Verdünnungsmittelfraktion im Gegenstrom zur beladenen Abluft durch den Wäscher, so daß die Lösungsmittel- und Verdünnungsmittelreste kondensieren und mit der Verdünnungsmittelfraktion in die Behandlungsanlage zurückgeführt werden.

Die Erfindung betrifft auch die dargestellte Kombination von Vorrichtungen zur Durchführung des beschriebenen Verfahrens.

In den folgenden Figuren 1 bis 8 wird die vorliegende Erfindung beispielhaft beschrieben.

Fig. 1 zeigt eine Prinzipskizze des erfindungsgemäßen Verfahrens.

In den Fig. 2 und 3 ist eine Ausführungsform der erfindungsgemäßen Verfahrens dargestellt, worin die Lösungsmittelaufarbeitung mittels einer Rektifikationskolonne erfolgt. Bei den dargestellten Varianten wird ein Lösungsmittel eingesetzt, das schwersiedender bzw. leichtsiedender als das eingesetzte Verdünnungsmittel ist.

In den Fig. 4 und 5 sind Ausführungsformen des erfindungsgemäßen Verfahrens dargestellt, bei denen das Herstellungs- oder Verarbeitungsverfahren eine bestimmte Vorbeladung an Lösungsmittel im Verdünnungsmittel zuläßt. In den dargestellten Varianten wird das vorbeladene Verdünnungsmittel durch einen Seitenabzug aus der Rektifizierkolonne entnommen.

Fig. 6, 7 und 8 zeigen erfindungsgemäße Verfahren, worin zusätzlich ein Abluftwäscher eingesetzt wird.

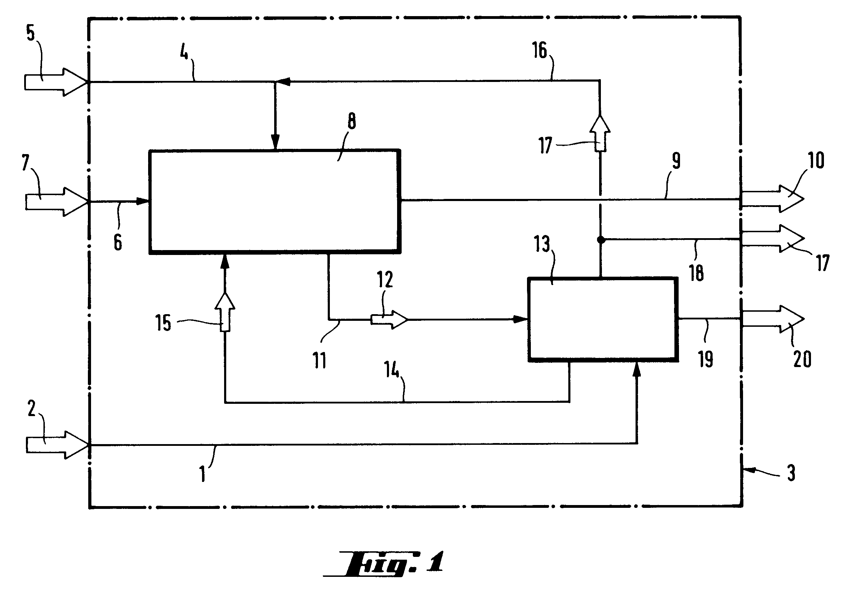

In Fig. 1 ist das erfindungsgemäße Verfahren schematisch dargestellt. Herstellungs- oder Verarbeitungsverfahren, die eine gezielte Verdünnung des eingesetzten Lösungsmittels erfordern, können günstiger dadurch betrieben werden, daß zumindest ein Teil des für die Verdünnung herangezogenen Stoffes in den Prozeß zurückgeführt wird. In Fig. 1 ist eine Bearbeitungsanlage (3) dargestellt, in der eine chemische Umsetzung und/oder Bearbeitung von Stoffen (7) durchgeführt wird. Über eine Zuführleitung (1) wird frisches Lösungsmittel (2) in die Bearbeitungsanlage (3) eingebracht, dieses dient im allgemeinen zur Deckung von Verlusten, die sich beim Betrieb der Anlage ergeben. Eine weitere Zuführleitung (4) dient zum Einbringen von frischem Verdünnungsmittel (5) in die Bearbeitungsanlage (3); des weiteren ist mindestens eine Zuführleitung (6) vorhanden, die zum Einbringen von umzusetzenden und/oder zu verarbeitenden Stoffen (7) in eine Behandlungsvorrichtung (8) der Bearbeitungsanlage (3) dient. Die in der Bearbeitungsanlage (3) gebildeten Produkte (10), wie Umsetzungsprodukte oder verarbeitete Stoffe, werden über die Abführleitung (9) aus der Bearbeitungsanlage (3) ausgeschleust.

Eine weitere Leitung (11) dient zum Zuführen des verbrauchten Gemisches (12) von Lösungsmittel, Verdünnungsmittel und Rückständen aus der Behandlungsvorrichtung (8) in eine Lösungsmittelrückgewinnungsanlage (13); diese Anlage (13) weist eine Rückführleitung (14) zum Rückführen der aufgearbeiteten Lösungsmittelfraktion (15) in die Behandlungsvorrichtung (8) auf, und eine weitere Rückführleitung (16) zum Rückführen der aufgearbeiteten Verdünnungsmittelfraktion (17) in die Behandlungsvorrichtung (8) auf. Die Rückführleitung (16) kann eine Ableitung (18) aufweisen, mit der ein Teil des Verdünnungsmittels aus dem Verfahren entfernt wird. Ferner weist die Lösungsmittelrückgewinnungsanlage (13) eine Ableitung (19) auf, über die Abfallstoffe (20) aus dem Verfahrenskreislauf entfernt werden.

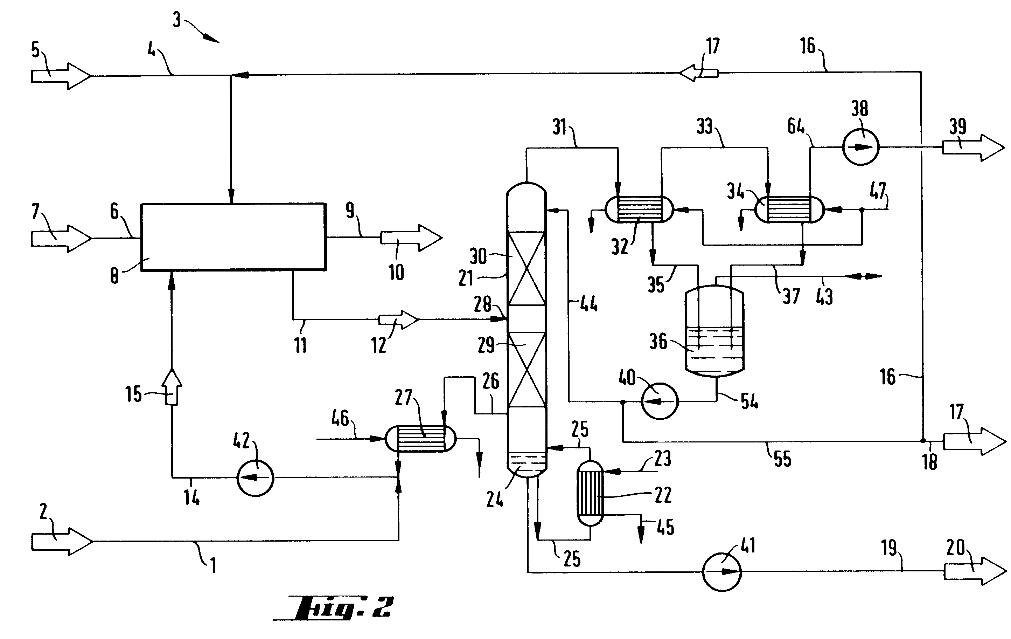

In Figur 2 wird eine Kreisführung von Lösungsmittel- und Verdünnungsmittelfraktion gezeigt, die durch Rektifikation des im Herstellungs- oder Bearbeitungsverfahren anfallenden verunreinigten Lösungsmittels zurückgewonnen werden. Bei der dargestellten Anlage wird eine Auftrennung in eine schwerer siedende Lösungsmittelfraktion und in eine leichter siedende Verdünnungsmittelfraktion vorgenommen. Über eine Zuführleitung (1) wird frisches Lösungsmittel (2) in eine Behandlungsvorrichtung (8) der Bearbeitungsanlage (3) eingebracht; dieses dient im allgemeinen zur Deckung von Verlusten, die sich beim Betrieb der Anlage ergeben. Eine weitere Zuführleitung (4) dient zum Einbringen von frischem Verdünnungsmittel (5) in die Behandlungsvorrichtung (8); des weiteren ist mindestens eine Zuführleitung (6) vorhanden, die zum Einbringen von umzusetzenden und/oder zu verarbeitenden Stoffen (7) in die Behandlungsvorrichtung (8) dient. Die in der Behandlungsvorrichtung (8) gebildeten Produkte (10) werden über die Abführleitung (9) ausgeschleust.

Eine weitere Leitung (11) dient zum Zuführen des verbrauchten Gemisches (12) von Lösungsmittel, Verdünnungsmittel und Rückständen aus der Behandlungsvorrichtung (8) in eine Rektifikationskolonne (21). Der Zulauf (28) ist in der Höhe des Kolonnenkörpers angebracht, in der die Konzentration an Lösungsmittel und Verdünnungsmittel im verbrauchten Gemisch in etwa mit der Konzentration der jeweiligen Fraktion innerhalb der Rektifikationskolonne übereinstimmt. In der Kolonne erfolgt eine Auftrennung des verbrauchten Gemisches (12) in eine schwerersiedende Lösungsmittelfraktion, welche über einen Seitenabzug (26) aus der Kolonne abgezogen wird, und in eine leichtersiedende Verdünnungsmittelfraktion, welche über Kopf durch die Leitung (31) abgezogen wird. In der Kolonne befinden sich an sich übliche Böden und/oder Packungsschichten (29) und (30). Die Abfallstoffe (20) reichern sich im Sumpf (24) an und werden über die Abführleitung (19) entfernt. Die Heizung der Kolonne erfolgt in der dargestellten Form über einen Wärmetauscher (22), der von der Sumpfflüssigkeit durchströmt wird und über die Leitung (25) aus der Kolonne (21) abgeführt und wieder zugeführt wird. Zuleitung (23) und Ableitung (45) dienen zum Versorgen des Wärmetauschers (22) mit Heizmedium, beispielsweise mit Heißdampf. Die über den Seitenabzug (26) abgeführte Lösungsmittelfraktion (15) wird über einen Wärmetauscher (27), der als Kühler betrieben wird, der Behandlungsvorrichtung (8) über eine Rückführleitung (14) wieder zugeführt.

Die über die Leitung (31) aus dem Kopf der Kolonne (21) abgeführte Verdünnungsmittelfraktion wird in den über Leitung (33) in Reihe geschalteten Kondensatoren (32) und (34) kondensiert und über die Leitungen (35) und (37) einem Lagertank (36) zugeführt, welcher über die Leitung (43) be- bzw. entlüftet wird. Kondensator (34) ist mit einer Abführleitung (64) ausgestattet, über welche Abgas (39) aus dem System entfernt werden kann. Der Lagertank (36) wird über eine Leitung (54) entleert, welche sich in eine Rückführleitung (44) und eine Abführleitung (55) aufteilt. Über die Rückführleitung (44) wird üblicherweise ein Teil des gebildeten Kondensats in die Kolonne (21) zurückgeleitet. Die Abführleitung (55) verzweigt sich in eine Ableitung (18) und in eine Rückführleitung (16) zum Rückführen der aufgearbeiteten Verdünnungsmittelfraktion (17) in die Behandlungsvorrichtung (8).

Die Steuerung der Stoffströme in den einzelnen Leitungen wird von Pumpen (38), (40), (41) und (42) übernommen.

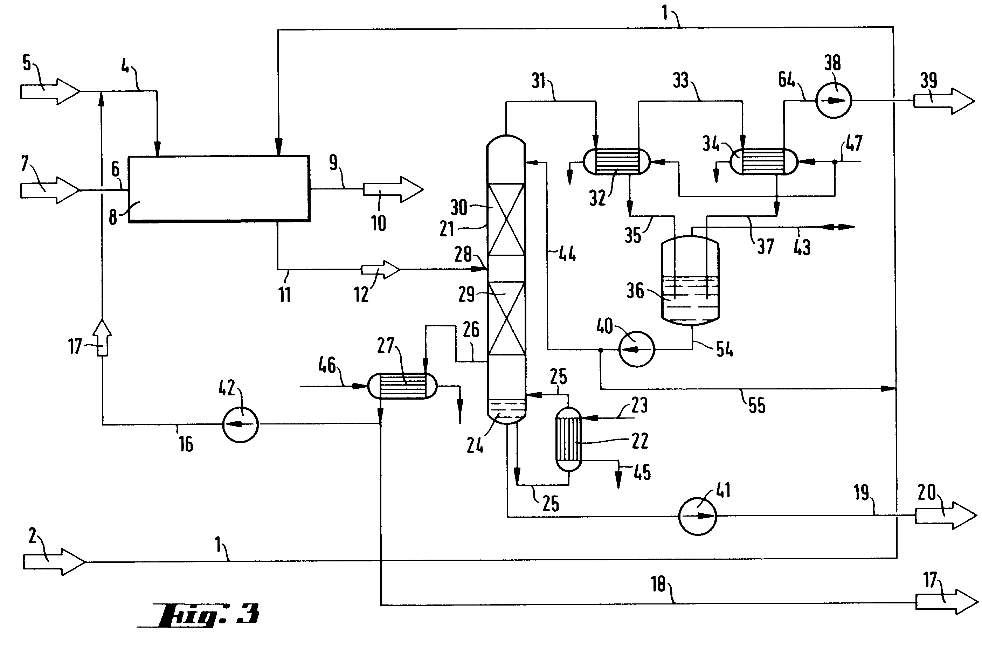

In Figur 3 wird eine Kreisführung von Lösungsmittel- und Verdünnungsmittelfraktion gezeigt, die durch Rektifikation des im Herstellungs- oder Bearbeitungsverfahren anfallenden verunreinigten Lösungsmittels zurückgewonnen werden. Die dargestellte Anlage ähnelt derjenigen aus Fig. 2, nur wird hier eine Auftrennung in eine schwerer siedende Verdünnungsmittelfraktion und in eine leichter siedende Lösungsmittelfraktion vorgenommen. Die einzelnen Komponenten und deren Verschaltung entsprechen weitgehend der Ausführung nach Fig. 2, auf deren Beschreibung weiter oben verwiesen wird. Im Lagertank (36) fällt in Abänderung zu Fig. 2 die Lösungsmittelfraktion an, welche über die Abführleitung (55) in die Zuführleitung (1) für frisches Lösungsmittel (2) eingeleitet wird.

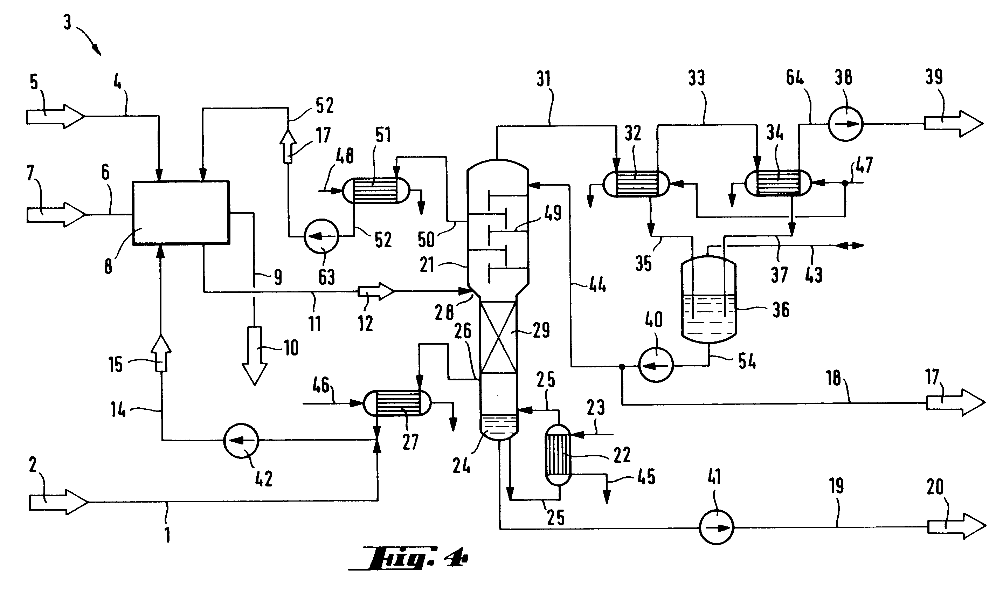

In Figur 4 wird eine Kreisführung von Lösungsmittel- und Verdünnungsmittelfraktion gezeigt, die durch Rektifikation des im Herstellungs- oder Bearbeitungsverfahren anfallenden verunreinigten Lösungsmittels zurückgewonnen werden. Bei der dargestellten Anlage wird eine Auftrennung in eine schwerer siedende Lösungsmittelfraktion und in leichter siedende Verdünnungsmittelfraktionen vorgenommen. Die in Fig. 4 dargestellte Ausführungsform unterscheidet sich von der in Fig. 2 dargestellten Ausführungsform im wesentlichen dadurch, daß die in die Behandlungsvorrichtung (8) rückgeführte Verdünnungsmittelfraktion über einen unter dem Kolonnenkopf befindlichen Seitenabzug (50) aus der Rektifikationskolonne entfernt wird. Die Zusammensetzung dieser Verdünnungsmittelfraktion unterscheidet sich von der Zusammensetzung der über Kopf abgezogenen Verdünnungsmittelfraktion; auch liegt der Siedepunkt der ersteren Fraktion höher, so daß die Kondensation dieser Fraktion bei höherer Temperatur erfolgen kann als die Kondensation der Kopffraktion.

Über eine Zuführleitung (1) wird frisches Lösungsmittel (2) in eine Leitung (14) eingebracht, die in die Behandlungsvorrichtung (8) der Bearbeitungsanlage (3) mündet. Eine weitere Zuführleitung (4) dient zum Einbringen von frischem Verdünnungsmittel (5) in die Behandlungsvorrichtung (8); des weiteren ist mindestens eine Zuführleitung (6) vorhanden, die zum Einbringen von umzusetzenden und/oder zu verarbeitenden Stoffen (7) in die Behandlungsvorrichtung (8) dient. Die in der Behandlungsvorrichtung (8) gebildeten Produkte (10) werden über die Abführleitung (9) ausgeschleust.

Eine weitere Leitung (11) dient zum Zuführen des verbrauchten Gemisches (12) von Lösungsmittel, Verdünnungsmittel und gegebenenfalls Rückständen aus der Behandlungsvorrichtung (8) in eine Rektifikationskolonne (21). Der Zulauf (28) ist in der Höhe des Kolonnenkörpers angebracht, in der die Konzentration an Lösungsmittel und Verdünnungsmittel im verbrauchten Gemisch in etwa mit der Konzentration der jeweiligen Fraktion innerhalb der Rektifikationskolonne übereinstimmt. In der Kolonne erfolgt eine Auftrennung des verbrauchten Gemisches (12) in eine schwerersiedende Lösungsmittelfraktion, welche über einen Seitenabzug (26) aus der Kolonne abgezogen wird, und in eine leichtersiedende Verdünnungsmittelfraktion, welche über einen Seitenabzug (50) und über Kopf durch die Leitung (31) abgezogen wird. In der Kolonne befinden sich an sich übliche Böden und/oder Packungsschichten (29) sowie Böden (49). Die Abfallstoffe (20) reichern sich im Sumpf (24) an und werden über die Abführleitung (19) entfernt. Die Heizung der Kolonne erfolgt in der dargestellten Form über einen Wärmetauscher (22), der von der Sumpfflüssigkeit durchströmt wird und über die Leitung (25) aus der Kolonne (21) abgeführt und wieder zugeführt wird. Zuleitung (23) und Ableitung (45) dienen zum Versorgen des Wärmetauschers (22) mit Heizmedium, beispielsweise mit Heißdampf. Die über den Seitenabzug (26) abgeführte Lösungsmittelfraktion (15) wird über einen Wärmetauscher (27), der als Kühler betrieben wird, der Behandlungsvorrichtung (8) über eine Rückführleitung (14) wieder zugeführt.

Die über den Seitenabzug (50) aus der Kolonne (21) abgeführte Verdünnungsmittelfraktion wird im Kondensator (51) kondensiert und über die Leitung (52) in die Behandlungsvorrichtung (8) zurückgeführt. Die Kühlung von Kondensator (51) erfolgt mit Kühlmittel (48), welches eine höhere Temperatur aufweisen kann, als das in anderen Kondensatoren der Anlage verwendete Kühlmittel, beispielsweise Kühlmittel (46) und (47). Dieser Kondensator kann daher mit Kühlmittel betrieben werden, das bereits andere Kondensatoren in der Anlage durchlaufen hat.

Die über die Leitung (31) aus dem Kopf der Kolonne (21) abgeführte Verdünnungsmittelfraktion wird in den über Leitung (33) in Reihe geschalteten Kondensatoren (32) und (34) kondensiert und über die Leitungen (35) und (37) einem Lagertank (36) zugeführt. Kondensator (34) ist mit einer Abführleitung (64) ausgestattet, über welche Abgas (39) aus dem System entfernt werden kann. Der Lagertank (36) wird über eine Leitung (54) entleert, welche sich in eine Rückführleitung (44) und eine Ableitung (18) aufteilt. Über die Rückführleitung (44) wird üblicherweise ein Teil des gebildeten Kondensats in die Kolonne (21) zurückgeleitet. Über die Ableitung (18) wird Verdünnungsmittel (17) aus der Bearbeitungsanlage (3) ausgeschleust.

Die Steuerung der Stoffströme in den einzelnen Leitungen wird von Pumpen (38), (40), (41), (42) und (63) übernommen.

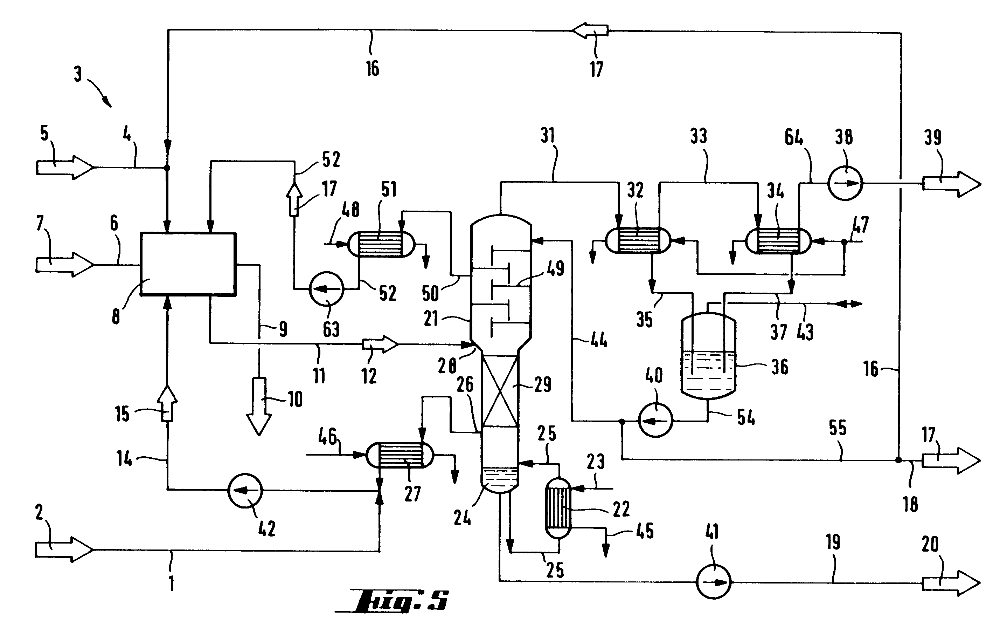

In Figur 5 wird eine Kreisführung von Lösungsmittel- und Verdünnungsmittelfraktion gezeigt, die durch Rektifikation des im Herstellungs- oder Bearbeitungsverfahren anfallenden verunreinigten Lösungsmittels zurückgewonnen werden. Bei der dargestellten Anlage wird eine Auftrennung in eine schwerer siedende Lösungsmittelfraktion und in leichter siedende Verdünnungsmittelfraktionen vorgenommen. Die in Fig. 5 dargestellte Ausführungsform unterscheidet sich von der in Fig. 4 dargestellten Ausführungsform im wesentlichen dadurch, daß in die Behandlungsvorrichtung (8) rückgeführten Verdünnungsmittelfraktionen sowohl über einen unter dem Kolonnenkopf befindlichen Seitenabzug (50) als auch über Kopf aus der Rektifikationskolonne entfernt werden. Die einzelnen Komponenten und deren Verschaltung entsprechen weitgehend der Ausführung nach Fig. 4, auf deren Beschreibung weiter oben verwiesen wird. Abführleitung (55) verzweigt sich in Abänderung zu Fig. 4 in Rückführleitung (16) und in Ableitung (18).

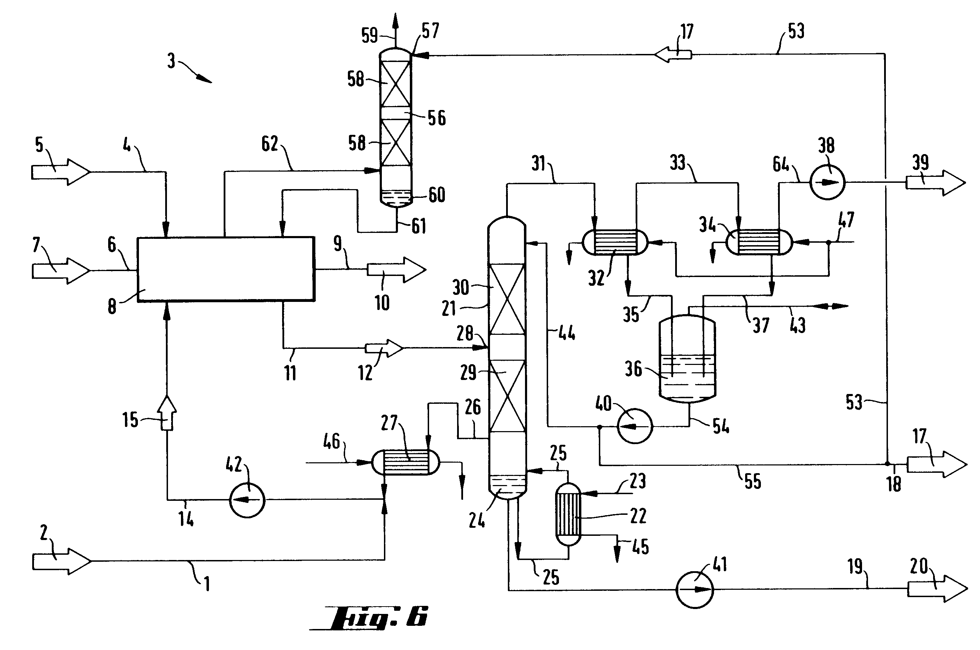

In Figur 6 wird eine Kreisführung von Lösungsmittel- und Verdünnungsmittelfraktion gezeigt, die durch Rektifikation des im Herstellungs- oder Bearbeitungsverfahren anfallenden verunreinigten Lösungsmittels zurückgewonnen werden. Bei der dargestellten Anlage wird eine Auftrennung in eine schwerer siedende Lösungsmittelfraktion und in eine leichter siedende Verdünnungsmittelfraktion vorgenommen. Die Rückführung der Verdünnungsmittelfraktion erfolgt bei dieser Anlage über einen Abluftwäscher (56).

Die dargestellte Anlage ähnelt derjenigen aus Fig. 2, nur wird hier bei der Rückführung der Verdünnungsmittelfraktion ein Abluftwäscher (56) zwischengeschaltet. Die einzelnen Komponenten und deren Verschaltung entsprechen weitgehend der Ausführung nach Fig. 2, auf deren Beschreibung weiter oben verwiesen wird.

Die Abführleitung (55) verzweigt sich in eine Ableitung (18) und in eine Rückführleitung (53) zum Rückführen der aufgearbeiteten Verdünnungsmittelfraktion (17) über einen Abluftwäscher (56) in die Behandlungsvorrichtung (8). Der Abluftwäscher (56) enthält üblicherweise Böden oder Packungsschichten (58). In der dargestellten Form wird die Verdünnungsmittelfraktion (17) über einen Zulauf (57), der sich am den Kopf des Abluftwäschers (56) befindet, eingeleitet und die zu reinigende Abluft, welche üblicherweise noch Lösungs- und Verdünnungsmittelreste enthält, wird aus der Behandlungsvorrichtung (8) über die Leitung (62) in den Abluftwäscher (56) eingeleitet und im Gegenstrom zur Verdünnungsmittelfraktion (17) geführt. Im unteren Teil des Abluftwäschers (56) bildet sich ein Sumpf (60), der über die Leitung (61) der Behandlungsvorrichtung (8) wieder zugeleitet wird, während die gereinigte Abluft (59) den Abluftwäscher (56) über den Kopf verläßt.

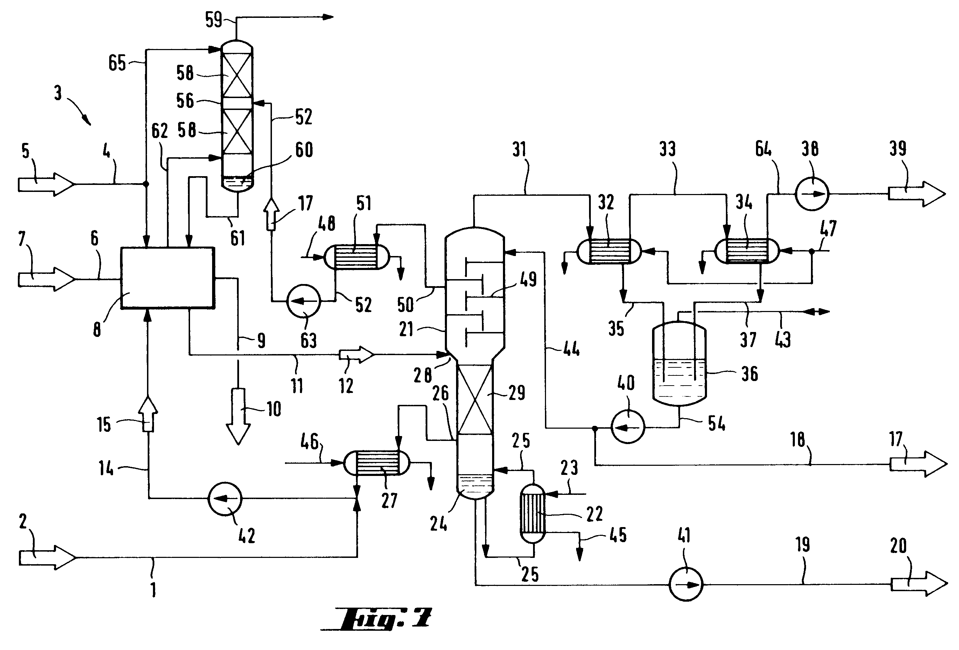

In Figur 7 wird eine Kreisführung von Lösungsmittel- und Verdünnungsmittelfraktion gezeigt, die durch Rektifikation des im Herstellungs- oder Bearbeitungsverfahren anfallenden verunreinigten Lösungsmittels zurückgewonnen werden. Bei der dargestellten Anlage wird eine Auftrennung in eine schwerer siedende Lösungsmittelfraktion und in leichter siedende Verdünnungsmittelfraktionen vorgenommen. Die in Fig. 7 dargestellte Ausführungsform ähnelt der in Fig. 4 dargestellten Ausführungsform, worin die in die Behandlungsvorrichtung (8) rückgeführte Verdünnungsmittelfraktion über einen unter dem Kolonnenkopf befindlichen Seitenabzug (50) aus der Rektifikationskolonne (21) entfernt wird. Die dargestellte Anlage ähnelt derjenigen aus Fig. 4, nur wird hier bei der Rückführung der Verdünnungsmittelfraktion ein Abluftwäscher (56) zwischengeschaltet. Die einzelnen Komponenten und deren Verschaltung entsprechen weitgehend der Ausführung nach Fig. 4, auf deren Beschreibung weiter oben verwiesen wird.

Auch diese Ausführungsform weist den Vorteil auf, daß die Zusammensetzung der aus dem Seitenabzug abgeführten Verdünnungsmittelfraktion sich von der Zusammensetzung der über Kopf abgezogenen Verdünnungsmittelfraktion unterscheidet; der Siedepunkt der ersteren Fraktion liegt höher, so daß die Kondensation dieser Fraktion bei höherer Temperatur erfolgen kann als die Kondensation der Kopffraktion.

Die Leitung (52) zum Rückführen der aufgearbeiteten Verdünnungsmittelfraktion (17) mündet in einen Abluftwäscher (56). Der Abluftwäscher (56) enthält üblicherweise Böden oder Packungsschichten (58). In der dargestellten Form wird die Verdünnungsmittelfraktion (17) seitlich in den Kolonnenkörper des Abluftwäschers (56) eingeleitet und über eine weitere Leitung (65) wird frisches Verdünnungsmittel (5) über Kopf in den Abluftwäscher (56) eingeleitet. Die zu reinigende Abluft, welche üblicherweise noch Lösungs- und Verdünnungsmittelreste enthält, wird aus der Behandlungsvorrichtung (8) über die Leitung (62) in den Abluftwäscher (56) eingeleitet und im Gegenstrom zur Verdünnungsmittelfraktion (17) geführt. Im unteren Teil des Abluftwäschers (56) bildet sich ein Sumpf (60), der über die Leitung (61) der Behandlungsvorrichtung (8) wieder zugeleitet wird. Die gereinigte Abluft (59) wird aus dem Kopf des Abluftwäschers (56) herausgeführt.

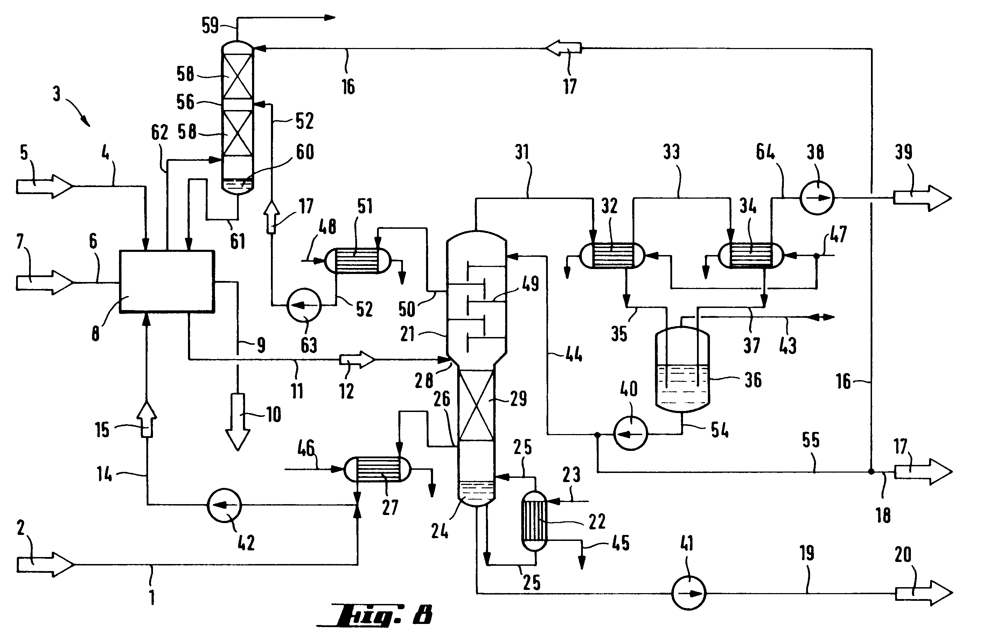

In Figur 8 wird eine Kreisführung von Lösungsmittel- und Verdünnungsmittelfraktion gezeigt, die durch Rektifikation des im Herstellungs- oder Bearbeitungsverfahren anfallenden verunreinigten Lösungsmittels zurückgewonnen werden. Bei der dargestellten Anlage wird eine Auftrennung in eine schwerer siedende Lösungsmittelfraktion und in leichter siedende Verdünnungsmittelfraktionen vorgenommen. Die in Fig. 8 dargestellte Ausführungsform ähnelt der in Fig. 5, worin die in die Behandlungsvorrichtung (8) rückgeführten Verdünnungsmittelfraktionen sowohl über einen unter dem Kolonnenkopf befindlichen Seitenabzug (50) als auch über Kopf aus der Rektifikationskolonne entfernt werden. Zusätzlich zur Ausführungsform gemäß Fig. 5 wird hier bei der Rückführung beider Verdünnungsmittelfraktionen ein Abluftwäscher (56) zwischengeschaltet. Die einzelnen Komponenten und deren Verschaltung entsprechen weitgehend der Ausführung nach Fig. 5, auf deren Beschreibung weiter oben verwiesen wird.

Die Leitungen (16) und (52) zum Rückführen der Verdünnungsmittelfraktion (17) münden in einen Abluftwäscher (56). Der Abluftwäscher (56) enthält üblicherweise Böden oder Packungsschichten (58). In der dargestellten Form wird die aus dem Kolonnenkopf abgezogene Verdünnungsmittelfraktion (17) über den Kopf in den Abluftwäscher (56) eingeleitet und die aus dem Seitenabzug aus der Kolonne (21) abgezogene Verdünnungsmittelfraktion (17) wird über die Leitung (52) in die Mitte des Abluftwäschers (56) eingeleitet. Die zu reinigende Abluft, welche üblicherweise noch Lösungs- und Verdünnungsmittelreste enthält, wird aus der Behandlungsvorrichtung (8) über die Leitung (62) in den Abluftwäscher (56) eingeleitet und im Gegenstrom zur Verdünnungsmittelfraktion (17) geführt. Im unteren Teil des Abluftwäschers (56) bildet sich ein Sumpf (60), der über die Leitung (61) der Behandlungsvorrichtung (8) wieder zugeleitet wird.

## Patentansprüche

1. Verfahren zur Rückgewinnung und Wiederverwendung von Flüssigkeiten, die bei der chemischen Umsetzung und/oder der Verarbeitung von Stoffen als Lösungsmittel und zur gezielten Verdünnung des Lösungsmittels eingesetzt werden, umfassend die Maßnahmen:
a1) Einbringen von frischem Lösungsmittel in eine Bearbeitungsanlage,
b1) Einbringen von frischem Verdünnungsmittel in die Bearbeitungsanlage,
c1) Einbringen von umzusetzenden und/oder zu verarbeitenden Stoffen in eine Behandlungsvorrichtung der Bearbeitungsanlage,
d1) Ausschleusen von Produkten aus der Bearbeitungsanlage,
e1) Zuführen des verbrauchten Gemisches von Lösungsmittel, Verdünnungsmittel und Rückständen aus der Umsetzung und/oder Verarbeitung der Stoffe zu einer Lösungsmittelrückgewinnungsanlage,
f1) Auftrennen des Gemisches aus Schritt e1) in der Lösungsmittelrückgewinnungsanlage in eine Lösungsmittelfraktion, welche hauptsächlich aus Lösungsmittel besteht und gegebenenfalls einen geringen Anteil an Verdünnungsmittel enthält, in eine Verdünnungsmittelraktion, welche hauptsächlich aus Verdünnungsmittel besteht und gegebenenfalls einen geringen Anteil an Lösungsmittel enthält, und in Rückstände aus der Umsetzung und/oder Verarbeitung der Stoffe,
g1) Rückführen der Lösungsmittelfraktion in die Bearbeitungsanlage, so daß diese für die Umsetzung und/oder Verarbeitung der Stoffe erneut zur Verfügung steht,
h1) Rückführen der
Verdünnungsmittelfraktion in die Bearbeitungsanlage, so daß diese für die Umsetzung und/oder Verarbeitung der Stoffe erneut zur Verfügung steht, und
i1) Ausschleusen von Rückständen aus der Umsetzung und/oder Verarbeitung der Stoffe aus der Bearbeitungsanlage.

2. Verfahren nach Anspruch 1, dadurch gekennzeichnet, daß es sich bei der chemischen Umsetzung von Stoffen um eine Polymerisation, Polykondensation oder Polyaddition handelt.

3. Verfahren nach Anspruch 1, dadurch gekennzeichnet, daß es sich bei der Verarbeitung von Stoffen um eine Reinigung von Gegenständen handelt, bei der Verunreinigungen durch Behandlung mit einem Lösungsmittel entfernt werden.

4. Verfahren nach Anspruch 1, dadurch gekennzeichnet, daß es sich bei der Verarbeitung von Stoffen um eine Formgebung handelt, bei der Polymere aus Lösungen in eine gewünschte Form überführt werden, insbesondere in Folien, Fasern oder Beschichtungen.

5. Verfahren nach Anspruch 4, dadurch gekennzeichnet, daß es sich bei der Verarbeitung von Stoffen um eine Formgebung handelt, bei der Polymere aus Lösungen in Faserform überführt werden, wobei ein Naßspinnverfahren oder ein Trocken-Naßspinnverfahren angewendet wird, und sich insbesondere direkt an das Ausfällen des Fadens im Koagulationsbad eine Nachbehandlung anschließt.

6. Verfahren nach Anspruch 1, dadurch gekennzeichnet, daß es sich bei dem Lösungsmittel um ein organisches, polares und aprotisches Lösungsmittel handelt, insbesondere um N-Methylpyrrolidon, N,N-Dimethylformamid, N,N-Dimethylacetamid und Dimethylsulfoxid.

7. Verfahren nach Anspruch 1, dadurch gekennzeichnet, daß es sich bei dem Verdünnungsmittel um Wasser handelt.

8. Verfahren nach Anspruch 5, dadurch gekennzeichnet, daß das verbrauchte Gemisch nach Schritt e1) hauptsächlich aus dem Koagulationsbad stammt und organisches, polares und aprotisches Lösungsmittel oder Gemische solcher Lösungsmittel und Wasser enthält.

9. Verfahren nach Anspruch 5, dadurch gekennzeichnet, daß das aus dem Koagulationsbad und gegebenenfalls den Nachbehandlungsvorrichtungen, wie Verstreck-, Avivage- und Waschbädern, gesammelte Gemisch aus Spinnlösungsmittel, Wasser und Rückständen aus dem Fällbad und der Nachbehandlung zu einer Lösungsmittelrückgewinnungsanlage geleitet wird und das Gemisch dort durch Rektifikation in eine Lösungsmittelfraktion, in eine Verdünnungsmittelfraktion und in Rückstände aus dem Fällbad und der Nachbehandlung aufgetrennt wird.

10. Verfahren nach Anspruch 9, dadurch gekennzeichnet, daß die Zusammensetzung eines über einen Seitenabzug abgeführten Teils der die Rektifikationskolonne verlassenden Lösungsmittel- und Verdünnungsmittelfraktion so gewählt wird, daß das Kühlmittel für die Rektifikationskolonne vor seinem Einsatz keiner zusätzlichen Kühlung unterzogen werden muß oder daß erwärmtes Kühlmittel aus anderen Kühlern der Behandlungsanlage verwendet werden kann.

11. Verfahren nach Anspruch 1, dadurch gekennzeichnet, daß die Rückführung zumindest eines Teils der Lösungsmittel- oder Verdünnungsmittelfraktion über einen Abluftwäscher erfolgt, mit dem die aus der Bearbeitungsanlage stammende und mit Lösungsmittel- und Verdünnungsmitteldämpfen angereicherte Abluft gereinigt wird.

12. Vorrichtung zur Durchführung von chemischer Umsetzung und/oder Verarbeitung von Stoffen unter Verwendung von Lösungsmittel und Verdünnungsmittel, das zur gezielten Verdünnung des Lösungsmittels eingesetzt wird, enthaltend die Komponenten:
a2) Zuführleitung (1) zum Einbringen von frischem Lösungsmittel (2) in eine Bearbeitungsanlage (3),
b2) Zuführleitung (4) zum Einbringen von frischem Verdünnungsmittel (5) in die Bearbeitungsanlage (3),
c2) Zuführleitung (6) zum Einbringen von umzusetzenden und/oder zu verarbeitenden Stoffen (7) in eine Behandlungsvorrichtung (8) der Bearbeitungsanlage (3),
d2) Abführleitung (9) zum Ausschleusen von Produkten (10) aus der Bearbeitungsanlage (3),
e2) Leitung (11) zum Zuführen des verbrauchten Gemisches (12) von Lösungsmittel, Verdünnungsmittel und Rückständen aus der Umsetzung und/oder Verarbeitung der Stoffe zu einer Lösungsmittelrückgewinnungsanlage (13),
f2) Rückführleitung (14) zum Rückführen der Lösungsmittelfraktion (15), welche hauptsächlich aus Lösungsmittel besteht und gegebenenfalls einen geringen Anteil an Verdünnungsmittel enthält, aus der Lösungsmittelrückgewinnungsanlage (13) in die Behandlungsvorrichtung (8), so daß diese für die Umsetzung und/oder Verarbeitung der Stoffe erneut zur Verfügung steht,
g2) Rückführleitung (16) der
Verdünnungsmittelfraktion (17), welche hauptsächlich aus Verdünnungsmittel (5) besteht und gegebenenfalls einen geringen Anteil an Lösungsmittel (2) enthält, aus der Lösungsmittelrückgewinnungsanlage (13) in die Behandlungsvorrichtung (8), so daß diese für die Umsetzung und/oder Verarbeitung der Stoffe erneut zur Verfügung steht, und
h2) Ableitung (19) zur Entfernung von Abfallstoffen (20) aus der Bearbeitungsanlage (3).

13. Vorrichtung gemäß Anspruch 12, worin das Auftrennen des verbrauchten Gemisches (12) in die Lösungsmittelfraktion (15) und in die Verdünnungsmittelfraktion (17) in einer Rektifikationskolonne (21) erfolgt.

14. Vorrichtung gemäß Anspruch 13, worin
- der Zulauf (28) der Leitung (11) zum Zuführen des verbrauchten Gemisches (12) von Lösungsmittel, Verdünnungsmittel und Rückständen aus der Behandlungsvorrichtung (8) in eine Lösungsmittelrückgewinnungsanlage (13) in der Höhe des Kolonnenkörpers einer Rektifikationskolonne (21) angebracht ist, in der die Konzentration an Lösungsmittel und Verdünnungsmittel im verbrauchten Gemisch in etwa mit der Konzentration der jeweiligen Fraktion innerhalb der Rektifikationskolonne übereinstimmt,
- in der Rektifikationskolonne (21) eine Auftrennung des verbrauchten Gemisches (12) in eine schwerersiedende Fraktion, welche über einen Seitenabzug (26) aus der Rektifikationskolonne (21) abgezogen wird, und in eine leichtersiedende Fraktion, welche über Kopf durch die Leitung (31) abgezogen wird, erfolgt,
- eine Abführleitung (19) vorgesehen ist, mit der die im Sumpf (24) angereicherten Abfallstoffe entfernt werden,
- die über den Seitenabzug (26) abgeführte schwerersiedende Fraktion über einen Wärmetauscher (27), der als Kühler betrieben wird, der Behandlungsvorrichtung (8) über eine Rückführleitung (14) wieder zugeführt wird,
- die über die Leitung (31) aus dem Kopf der Rektifikationskolonne (21) abgeführte leichtersiedende Fraktion in den über Leitung (33) in Reihe geschalteten Kondensatoren (32) und (34) kondensiert wird und über die Leitungen (35) und (37) einem Lagertank (36) zugeführt wird
- Lagertank (36) über eine Leitung (54) entleert wird, welche sich in eine Rückführleitung (44) für einen Teil des gebildeten Kondensats in die Rektifikationskolonne (21) und in eine Abführleitung (55) aufteilt, die sich in eine Ableitung (18) und in eine Rückführleitung (16) zum Rückführen der aufgearbeiteten Fraktion in die Behandlungsvorrichtung (8) verzweigt.

15. Vorrichtung gemäß Anspruch 13, worin
- der Zulauf (28) der Leitung (11) zum Zuführen des verbrauchten Gemisches (12) von Lösungsmittel, Verdünnungsmittel und Rückständen aus der Behandlungsvorrichtung (8) in eine Lösungsmittelrückgewinnungsanlage (13) in der Höhe des Kolonnenkörpers einer Rektifikationskolonne (21) angebracht ist, in der die Konzentration an Lösungsmittel und Verdünnungsmittel im verbrauchten Gemisch in etwa mit der Konzentration der jeweiligen Fraktion innerhalb der Rektifikationskolonne übereinstimmt,
- in der Rektifikationskolonne (21) eine Auftrennung des verbrauchten Gemisches (12) in eine schwerersiedende Fraktion, welche über einen Seitenabzug (26) aus der Rektifikationskolonne (21) abgezogen wird, und in eine leichtersiedende Fraktion, welche über einen Seitenabzug (50) und über Kopf durch die Leitung (31) abgezogen wird,
- die über den Seitenabzug (50) aus der Rektifikationskolonne (21) abgeführte Verdünnungsmittelfraktion im Kondensator (51) kondensiert und über die Leitung (52) in die Behandlungsvorrichtung (8) zurückgeführt wird
- die Kühlung von Kondensator (51) mit Kühlmittel (48) erfolgt, welches bereits andere Kondensatoren in der Anlage durchlaufen hat,
- eine Abführleitung (19) vorgesehen ist, mit der die im Sumpf (24) angereicherten Abfallstoffe entfernt werden,
- die über den Seitenabzug (26) abgeführte schwerersiedende Fraktion über einen Wärmetauscher (27), der als Kühler betrieben wird, der Behandlungsvorrichtung (8) über eine Rückführleitung (14) wieder zugeführt wird,
- die über die Leitung (31) aus dem Kopf der Rektifikationskolonne (21) abgeführte leichtersiedende Fraktion in den über Leitung (33) in Reihe geschalteten Kondensatoren (32) und (34) kondensiert wird und über die Leitungen (35) und (37) einem Lagertank (36) zugeführt wird
- Lagertank (36) über eine Leitung (54) entleert wird, welche sich in eine Rückführleitung (44) für einen Teil des gebildeten Kondensats in die Rektifikationskolonne (21) und in eine Ableitung (18) zum Ausschleusen des Kondensats aus der Anlage aufteilt.

16. Vorrichtung gemäß Anspruch 15, worin
- die in die Behandlungsvorrichtung (8) rückgeführten leichter siedenden Fraktionen sowohl über einen unter dem Kolonnenkopf befindlichen Seitenabzug (50) als auch durch eine Leitung (31) über Kopf aus der Rektifikationskolonne (21) entfernt werden, und
- Abführleitung (55) sich in Rückführleitung (16) und in Ableitung (18) verzweigt.

17. Vorrichtung gemäß Anspruch 14, worin
- Abführleitung (55) sich in eine Ableitung (18) und in eine Rückführleitung (53) verzweigt, welche zum Rückführen der kondensierten leichter siedenden Fraktion (17) über einen Abluftwäscher (56) in die Behandlungsvorrichtung (8) dient,
- die leichter siedenden Fraktion (17) in den Abluftwäscher (56) eingeleitet und die zu reinigende Abluft, welche üblicherweise noch Lösungs- und Verdünnungsmittelreste enthält, aus der Behandlungsvorrichtung (8) über die Leitung (62) in den Abluftwäscher (56) eingeleitet und im Gegenstrom zur leichter siedenden Fraktion (17) geführt wird, und
- der sich im unteren Teil des Abluftwäschers (56) bildende Sumpf (60) über die Leitung (61) der Behandlungsvorrichtung (8) wieder zugeleitet wird.

18. Vorrichtung gemäß Anspruch 15, worin
- Leitung (52) zum Rückführen der leichter siedenden Fraktion (17) in einen Abluftwäscher (56) mündet,
- die leichter siedenden Fraktion (17) in den Abluftwäscher (56) eingeleitet und die zu reinigende Abluft, welche üblicherweise noch Lösungs- und Verdünnungsmittelreste enthält, aus der Behandlungsvorrichtung (8) über die Leitung (62) in den Abluftwäscher (56) eingeleitet und im Gegenstrom zur leichter siedenden Fraktion (17) geführt wird, und
- der sich im unteren Teil des Abluftwäschers (56) bildende Sumpf (60) über die Leitung (61) der Behandlungsvorrichtung (8) wieder zugeleitet wird.

19. Vorrichtung gemäß Anspruch 16, worin
- Leitungen (16) und (52) zum Rückführen der leichter siedenden Fraktion (17) in einen Abluftwäscher (56) münden,
- die aus dem Kolonnenkopf über Leitung (31) abgezogene leichter siedenden Fraktion (17) über den Kopf in den Abluftwäscher (56) eingeleitet wird,
- die aus dem Seitenabzug aus der Kolonne (21) abgezogene leichter siedenden Fraktion (17) über die Leitung (52) in die Mitte des Abluftwäschers (56) eingeleitet wird,
- die zu reinigende Abluft, welche üblicherweise noch Lösungs- und Verdünnungsmittelreste enthält, aus der Behandlungsvorrichtung (8) über die Leitung (62) in den Abluftwäscher (56) eingeleitet und im Gegenstrom zur leichter siedenden Fraktion (17) geführt wird, und
- der sich im unteren Teil des Abluftwäschers (56) bildende Sumpf (60) über die Leitung (61) der Behandlungsvorrichtung (8) wieder zugeleitet wird.
